# EUROPEAN PATENT APPLICATION

(11) **EP 1 280 076 A2**
(43) Date of publication of application: **29.01.2003**
(21) Application number: 02254754.1
(22) Date of filing: 08.07.2002
(51) Int. Cl.: G06F 17/30

(54) **System and method for generating and distributing a publication**

(30) Priority: 25.07.2001 US 915982
(71) Applicant: Hewlett-Packard Company, Palo Alto, CA 94304 (US)
(72) Inventor: Lee, Edward O., Corvallis, OR 97330 (US); Messner, Amy E., Eugene, OR 97408 (US); Justice, Timothy P., Corvallis, OR 97330 (US); Milton, John R., Corvallis, OR 97330 (US)
(74) Representative: Jackson, Richard Eric

(57) **Abstract**

A system and method for formatting a publication are provided. Broadly stated, the method comprises the steps of associating a content item with a publication in the server (103), identifying a presentation platform from a number of potential presentation platforms, and generating an output file (236) in the server (103) including the content item in a digital format recognizable by the presentation platform.

## Description

### TECHNICAL FIELD

The present invention is generally related to the field of information dissemination and, more particularly, is related to a system and method for generating and distributing a publication. Reference is made to U.S. Patent Application No. (Applicant's docket no. 10005369), "System and Method For Generating and Distributing a Publication", by Timothy Justice, filed on the same day herewith and assigned to the same assignee.

### BACKGROUND OF THE INVENTION

In the mid 1400's, Johann Gutenberg revolutionized how information is disseminated through his invention of the movable type press. With the publication of the Mazarin Bible, documents which were once held in the exclusive domain of a chosen few were now widely available to the masses. Nearly 550 years later, the mass media revolution that Gutenburg started is alive and well, complete with newspapers such as the New York Times and the Washington Post, magazines such as Newsweek and Sports Illustrated, and literally thousands upon thousands of other lesser known publications.

While these thousands of publications cover a wide range of interests, from news to sports to fashion to model rocketry, they have one thing in common: they are intended to be read by a mass market. Unlike the pre-Gutenberg days, where a document would literally be read by only one person or a very small number of people, it is not economically viable for today's publications to have such a small readership, due at least in part to high marketing, production and distribution costs. In fact, many of today's publications are funded to a very large extent by the advertising contained within them. These advertisers are attracted to publications that can consistently deliver a large, reliable audience of consumers that will be exposed to their advertising.

While this mass market publication model has worked well for hundreds of years, it is not without its problems. One such problem is that a typical reader of a publication has a wide variety of interests, and no single mass market publication will be able to satisfy all these interests. For example, a reader who is interested in international news, golf, fly fishing, genealogy, and computers may have to subscribe to several different publications to satisfy these interests. Of course, since these publications are intended for a mass market, they will also contain a significant amount of material including articles, advertising, and other content that does not hold our reader's interest. Consequently, our reader will ignore such material and a significant amount of paper is wasted. Advertisers know this, and agree to pay considerably less to mass market magazine or newspaper per 1000 exposures to their ad than they would pay to a direct-mail generator that can provide a more specific guarantee that the people exposed to their ad are of a demographic group that will be much more likely to read their ad and be interested in it.

In addition, it is neither cost-effective nor time effective for most readers to subscribe to and/or read a large number of publications. Generally, the typical reader will only subscribe to a few publications that are of the most interest to them. The reader reduced readership level of the publications our typical reader chooses not to subscribe to, even though he would be interested in at least some of the editorial and advertising content contained inside, means that the publication receives less subscription and advertising revenue than they otherwise would. If many other readers make the same decision, the continued health of the publication may be in jeopardy, and the publication may be forced to go out of business. In fact, many publications do go out of business yearly for failing to attract a sustaining number of advertisers and readers, even if there are a large number of readers that would be interested in reading their publication, and a corresponding number of advertisers anxious to have these readers exposed to their ads. In general, publications that fail to attract a substantial mass market of people willing to pay for and/or read them cease publication. This is a shame, since many of these publications would enrich the diversity of information available to all readers, and would provide an avenue for lesser known writers and artists to practice their wares.

In more recent years, a new type of publication has emerged, namely, the electronic publication. Readers of these publications typically sign onto the Internet through their computer, and read the publications online. Some of these publications allow users to state personal preferences on what type of material they want to read. Often, these personalized electronic publications include advertising, usually in the form of a banner ad that is placed on the top of the screen.

While these electronic publications have been an interesting development in the distribution of information, they still represent a tiny fraction of the information that is published under the more traditional post-Gutenburg model. Many readers of these electronic publications complain that they are very difficult to read, especially for long periods of time. While it might be convenient for a reader to sign onto the Internet to look at a news web site for a brief summary of late breaking news, this reader would most likely only spend a few minutes at the site, and would likely still subscribe to the more traditional print media such as Newsweek or the Washington Post. They would also likely spend significantly more time reading the more traditional printed publication than they would the electronic publication, and correspondingly, spend more time being exposed to the ads in the traditional printed publication. Accordingly, printed publications continue to flourish today more than five centuries after Gutenberg made them possible.

In addition, there are many new technologies that may be used to present information to a user. Electronic publications typically have been viewed through a screen of a personal computer. However, new means of information exchange exist now and will proliferate in the future. Such means include, for example, Palm Pilot computers, personal digital assistants, personal appliances, pagers, cellular telephones, and other means of information exchange and presentation. Unfortunately, these various technologies that can be employed to present publications to users typically require publications to be sent in a specific format that can be recognized and manipulated accordingly.

### SUMMARY OF THE INVENTION

In light of the forgoing, the present invention provides for a system and method for formatting a publication. In one embodiment, the system includes a processor coupled to a local interface and a memory coupled to the local interface. Publication distribution logic is stored on the memory and is executable by the processor. The publication distribution logic includes logic to associate a content item with a publication in the server and logic to identify a presentation platform from a number of potential presentation platforms. Also, the publication distribution logic includes logic to generate an output file in the server including the content item in a digital format recognizable by the presentation platform.

The present invention may also be viewed as a method for formatting a publication. Broadly stated, the present method includes the steps of associating a content item with a publication in the server, identifying a presentation platform from a number of potential presentation platforms, and generating an output file in the server including the content item in a digital format recognizable by the presentation platform.

The present invention provides distinct advantages. Specifically, it allows users to request a specific publication that is delivered to a client in a convenient manner. In addition, the publication is formatted in a digital file that is recognizable and may be manipulated by one or more of a number of presentation platforms. Thus, the present invention provides a publication to a user that may include content from many sources to users in a form convenient to the particular user.

Other features and advantages of the present invention will become apparent to a person with ordinary skill in the art in view of the following drawings and detailed description. It is intended that all such additional features and advantages be included herein within the scope of the present invention.

### BRIEF DESCRIPTION OF THE SEVERAL VIEWS OF THE DRAWINGS

The invention can be understood with reference to the following drawings. The components in the drawings are not necessarily to scale. Also, in the drawings, like reference numerals designate corresponding parts throughout the several views.
FIG. 1 is a block diagram of a publishing network according to an embodiment of the present invention;
FIG. 2 is a functional block diagram of publication distribution logic executed on a server in the publishing network of FIG. 1;
FIG. 3 is a functional block diagram of work centers employed in the publication distribution logic of FIG. 2;
FIG. 4 is a flow chart of functionality of the publication distribution logic of FIG. 2;
FIG. 5 is a flow chart of further functionality of the publication distribution logic of FIG. 2; and
FIG. 6 is a flow chart of further functionality of the publication distribution logic of FIG. 2.

### DETAILED DESCRIPTION OF THE INVENTION

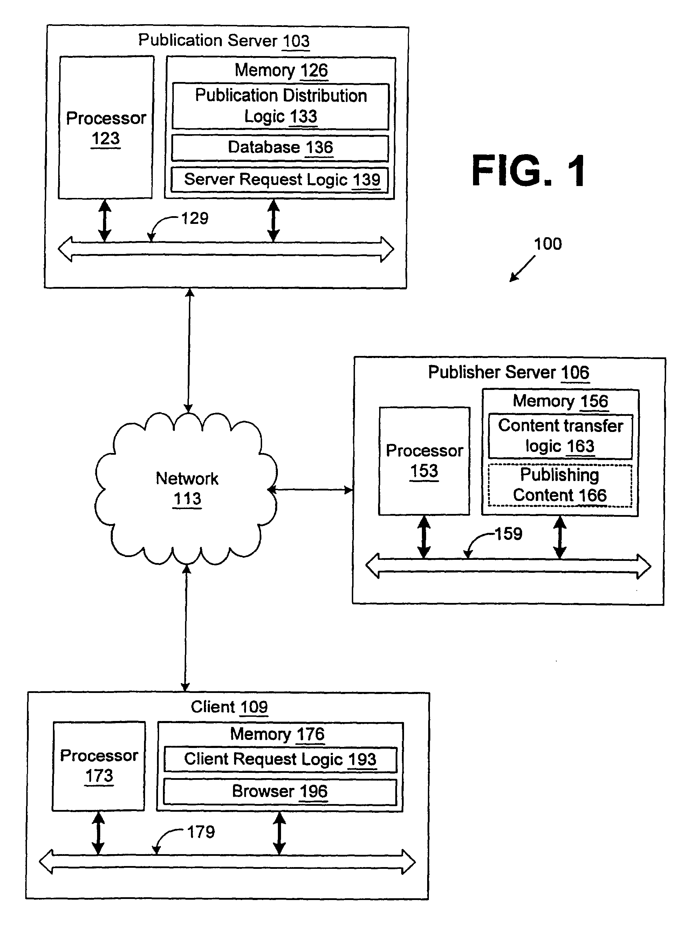

With reference to FIG. 1, shown is a publishing network 100 according to an embodiment of the present invention. The publishing network 100 includes a publication server 103, a publisher server 106, and a client 109. The publication server 103, publisher server 106, and the client 109 are in data communication with each other by way of a network 113. The network 113 may be, for example, the Internet, wide area networks (WANs), local area networks, wireless networks, or other suitable networks, *etc.* The network 113 may represent a combination of two or more of the above networks as well.

The publication server 103 includes a processor circuit that has a processor 123 and a memory 126, both of which are coupled to a local interface 129. The local interface 129 may be, for example, a data bus with an accompanying control bus as known by those with ordinary skill in the art.

Stored on the memory 126 is publication distribution logic 133, a database 136, and server request logic 139. The publication distribution logic 133 is executable by the processor 123 to generate a publication in digital form in a format that is recognizable by any one of a number of presentation platforms embodied in the client 109. Specifically, the publication distribution logic 133 receives a request for a particular publication and then generates the publication in the desired digital format that is transmitted to a presentation platform as will be discussed. The database 136 contains the content that is used to generate the publication as well as other information and data files employed by the publication distribution logic 133.

The publisher server 106 has a processor circuit that includes a processor 153 and a memory 156, both of which are coupled to a local interface 159. The local interface 159 may be, for example, a data bus with an accompanying control bus as known by those with ordinary skill in the art. Stored on the memory 156 is content transfer logic 163 and publishing content 166. The content transfer logic 163 is executable by the processor 153 to transmit the publishing content 166 to the publication server 103.

The client 109 also includes a processor circuit that features a processor 173 and a memory 176, both of which are coupled to a local interface 179. The local interface 179 may be, for example, a data bus with an accompanying control bus as known by those with ordinary skill in the art. Stored on the memory 176 and executable by the processor 173 are client request logic 193 and a browser 196 according to one embodiment of the present invention. The client request logic 193 is executable by the processor 173 to request a desired publication from the publication server 103. The browser 196 is executable by the processor 173 to present a publication received from the publication server 103 to a user. In this regard, the browser 196 executed on the client 109 provides an example of a presentation platform that is employed to present the publication to the user. According to the present invention, other presentation platforms may be employed as well.

The memories 126, 156, and 176 may include both volatile and nonvolatile memory components. Volatile components are those that do not retain data values upon loss of power. Conversely, nonvolatile components retain data upon a loss of power. Thus, the memories 126, 156, and 176 may comprise, for example, random access memory (RAM), read-only memory (ROM), hard disk drives, floppy disks accessed via an associated floppy disk drive, compact disks accessed via a compact disk drive, magnetic tapes accessed via an appropriate tape drive, and/or other memory components, or a combination of any two or more of these memory components.

In addition, each of the processors 123, 153, and 173 may represent multiple processors that operate in parallel. Similarly, each of the memories 126, 156, and 176 may represent multiple memories that are used in conjunction with the respective parallel processors. In such a case, each of the local interfaces 129, 159, and 179 may be an appropriate network that facilitates communication between any two of the multiple processors or between any one processor and any one memory, *etc.* In addition, the processors 123, 153, and 173; memories 126, 156, and 176; and local interfaces 129, 159, and 179 may be electrical or optical in nature. The memories 126, 156, and 176 may also be magnetic in nature.

User input devices (not shown) that may be employed with the publication server 103, the publisher server 106, and the client 109 include, for example, but are not limited to, scanners, keyboards, keypads, touch pads, touch screens, microphones, mice, joysticks, or one or more push buttons, *etc.* User output devices may include display screens, indicator lights, speakers, printers, *etc.* The particular display devices may further comprise, for example, a liquid crystal display screen, a gas plasma-based flat panel display, indicator lights, light emitting diodes, and other display devices.

In light of the foregoing discussion of the publishing network 100, the following provides a general operational overview. To begin, the client 109 executes the client request logic 193 to generate a request for a particular publication to present to the user by way of a particular presentation platform, such as, for example, the browser 196. Pursuant to the client request logic 193, the request can be generated on demand by the user, or alternatively, the request can be generated by the client request logic 193 in an automated fashion periodically according to predefined parameters as entered by the user. The request is then transmitted to the publication server 103 by way of the network 113.

Alternatively, a request for a particular publication may be generated in the publication server 103 pursuant to the server request logic 139. In particular, the server request logic 139 may be preset to specify one or more publications to be delivered to a user periodically at specific times. To this end, the server request logic 139 may include a scheduling database, for example, that includes prescription and delivery information. Such a database may be automatically searched to generate a request for a publication to be delivered to a user. The precise publication(s) and delivery times, *etc.,* may be determined when the user first subscribes to the publication service.

Whether generated in the client 109 or in the publication server 103, the request for a publication is provided to the publication distribution logic 133. The request includes information such as a publication identifier, a presentation platform identifier, a request identifier, and other information as needed. The publication identifier signifies the desired publication; the presentation platform identifier identifies the specific presentation platform that is to be employed to present the information to the user; and the request identifier uniquely identifies the request. The publication server 103 then reacts to the request by generating the desired publication. In particular, the publication server 103 gathers the content of the publication from the database 136 and generates the publication in a digital format that is recognizable by the specific presentation platform. The publication server 103 pursuant to the publication distribution logic 133 transmits the publication to the presentation platform such as, for example, the browser 196 executed on the client 109.

Upon receiving the publication, the presentation platform such as, for example, the browser 196 executed in the client 109 proceeds to perform all necessary operations to present the information to the user. In particular, various presentation platforms may be employed to present the publication to the user in one of several forms. For example, the publication may be presented as a printed document, a display on a display device, or other types of presentation modes. Thus, the concept of "presenting a publication to a user" as contemplated herein is defined broadly as depicting a publication in a form that is perceivable by a user so that the user may comprehend the information contained therein. The term "presentation platform" is defined herein as the system or device that is employed to present the publication to the user. A particular presentation platform may be implemented in terms of software executed on general purpose hardware, dedicated hardware that performs the functional aspects of the particular presentation platform, or a combination of software/general purpose hardware and dedicated hardware.

For example, one presentation platform may comprise a client 109 that executes a browser 196 as shown with reference to FIG. 1. Alternatively, an electronic mail service or mail reader may be employed in the place of the browser 196. Another presentation platform may comprise the client 109 with an attached printer to print the publication in the form of a document. In this regard, logic would be stored on the memory 176 and executed by the processor 173 to print out a publication received from the publication server 103 on the attached printer.

Further presentation platforms may include a pager device, cellular telephone device, personal appliance, Palm Pilot computers, personal digital assistants, or other mobile device that provides a screen or other means for displaying information to a user. For example, a pager or cellular telephone may include a processor circuit with a processor and a memory. Stored on this memory and executable by the processor may be, for example, a mini browser, electronic mail reader, or other logic to present the publication to the user via an appropriate display device, *etc.* In yet another alternative, the presentation platform may comprise a voice synthesizer executed on the client 109 with a voice signal output supplied to an output speaker. Also, the presentation platform may comprise, for example, electronic books, *etc.*

The presentation platforms discussed herein are provided as examples of a number of potential presentation platforms for which a publication may be prepared by the publication distribution logic 133. Other presentation platforms not discussed herein may further be identified by those with ordinary skill in the art. Such presentation platforms fall within the scope of the present invention. The publication distribution logic 133 serves to generate a publication in a digital format that is recognizable by any one of a number of prospective presentation platforms.

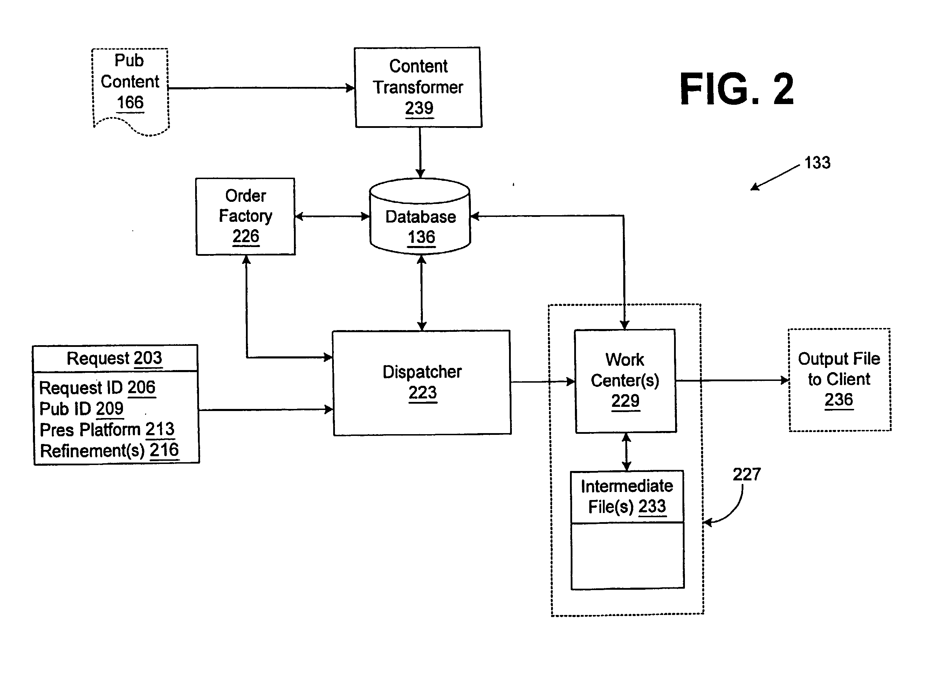

With reference to FIG. 2, shown is a functional block diagram of the publication distribution logic 133 (FIG.1) according to an embodiment of the present invention. As shown in FIG. 2, each block represents a module, object, or other grouping or encapsulation of underlying functionality as implemented in programming code. However, the same underlying functionality may exist in one or more modules, objects, or other groupings or encapsulations that differ from those shown in FIG. 2 without departing from the present invention as defined by the appended claims.

To begin, the publication distribution logic 133 receives a request 203 from either the client 109 (FIG. 1) pursuant to the client request logic 193 (FIG. 1) or from the publication server 103 (FIG. 1) pursuant to the server request logic 139 (FIG. 1) as discussed above. The request 203 includes, for example, a request identifier 206, a publication identifier 209, a presentation platform identifier 213 and refinements 216. It is understood that the request 203 may also include other information as appropriate or necessary to the formation of a particular publication.

The publication distribution logic 133 also includes a dispatcher 223, an order factory 226, and the database 136 as shown. Also, the publication distribution logic 133 includes publication assembly logic 227 with work centers 229 that generate one or more intermediate files 233 and an output file 236. The output file 236 is transmitted to a client 109. The publication distribution logic 133 also includes a content transformer 239 that receives the publication content 166 from the publisher server 106 (FIG. 1) and transforms it into a format for storage in the database 136. The format employed to store the publication content 166 on the database 136 may involve the use of, for example, extensible markup language (XML) or other suitable language. The specific format employed is such to allow the content to be recognized and manipulated by the other modules, objects, or other elements of the publication distribution logic 133.

Next a discussion of the operation and functionality of the components of the publication distribution logic 133 is offered. To begin, the request 203 that is generated either in the publication server 103 (FIG. 1) or in the client 109 (FIG. 1) is received by the dispatcher 223. Upon receiving a request 203, the dispatcher 223 supplies the request 203 to the order factory 226 to obtain a list of the content that is associated with the desired publication as identified by the request 203. In particular, the request 203 includes the publication identifier 209 that is associated with the list of content included in the publication to be generated by the publication distribution logic 133. The order factory 226 uses the publication identifier 209 to search the database 136 for all content items, which may include both images and text that are associated with the publication identifier 209.

Upon identifying all of the content items associated with the publication identifier 209 in the database 136, the order factory 226 generates an order (not shown) that essentially comprises a list of the content items in terms of their file name and location in the database 136. Also, in performing the search in the database 136, the order factory 226 may consult any refinements 216 that are included in the request 203 to limit or to qualify the search for the content that is performed. For example, the refinements 216 may indicate a particular issue date of a content item that is to be obtained or other general parameters relating to the content items themselves. After the order factory 226 creates the order that lists the content of the publication, it is then returned to the dispatcher 223.

When the dispatcher 223 receives the request 203, it performs a search of the database 136 for an appropriate routing associated with the presentation platform as identified by the presentation platform identifier 213. In this regard, the database includes a number of routings, each one associated with a particular presentation platform. The dispatcher 223 also searches for any style sheets and/or templates that are also stored in the database 136 to be employed by future work centers 229 in processing the publication before it is transmitted to the client 109 (FIG. 1) as the output file 236. Also, the dispatcher 223 transforms the order from the order factory 226 into a work order that is in a predefined format. For example, the work order that is generated contains the same information as the request 203 except it is in a format that is acceptable for further processing by the work centers 229.

The format employed for the work order may be, for example, a document type definition (DTD) using extensible markup language (XML) file or other similar structure that may be interpreted by the appropriate work center 229. For example, a work center 229 may include an extensible style sheet language (XSL) processor that performs various functions identified on an appropriate style sheet in light of the work order that is in XML format.

After the dispatcher 223 has the work order, the routing, and any style sheets/templates necessary to transform the content into the output file 236, the dispatcher 223 calls or otherwise activates the first work center 229 in the routing to begin processing the work order. Specifically, the dispatcher 223 supplies the work order and the style sheet/template to the appropriate work center 229. The work center 229 will then perform the functionality identified in the style sheet/template to either generate the output file 236 or an intermediate file 233. The intermediate file 233 may be used, for example, when there are multiple work centers 229 that must be employed based upon a particular routing to generate the output file 236. In particular one or more work centers 229 may create one or more intermediate files 233 as needed. For example, a work center 229 may obtain the actual content items from the database 136 based upon the listing thereof in the work order supplied by the dispatcher 223. These content items may be stored in random access memory in the publication server 103 as an intermediate file 233 in a format that is recognizable by subsequent work centers 229 identified in the routing. In this manner, the content items are then stored in random access memory where they may be further manipulated as necessary to produce the output file 236. The ultimate result of the transformations and other functionality performed by the work centers 229 is the output file 236 that is ultimately transmitted to the client 109 (FIG. 1).

The publication distribution logic 133 also includes the content transformer 239. The content transformer 239 essentially parses publishing content 166 received from the publisher server 106 and transforms it into appropriate format to be stored on the database 136. The format may use, for example, one or more document type definition(s) (DTD) using XML or other particular formatting language, *etc.* The format into which the content transformer 239 places the publishing content 166 is that which is compatible with the order factory 226, the dispatcher 223, and the work centers 229.

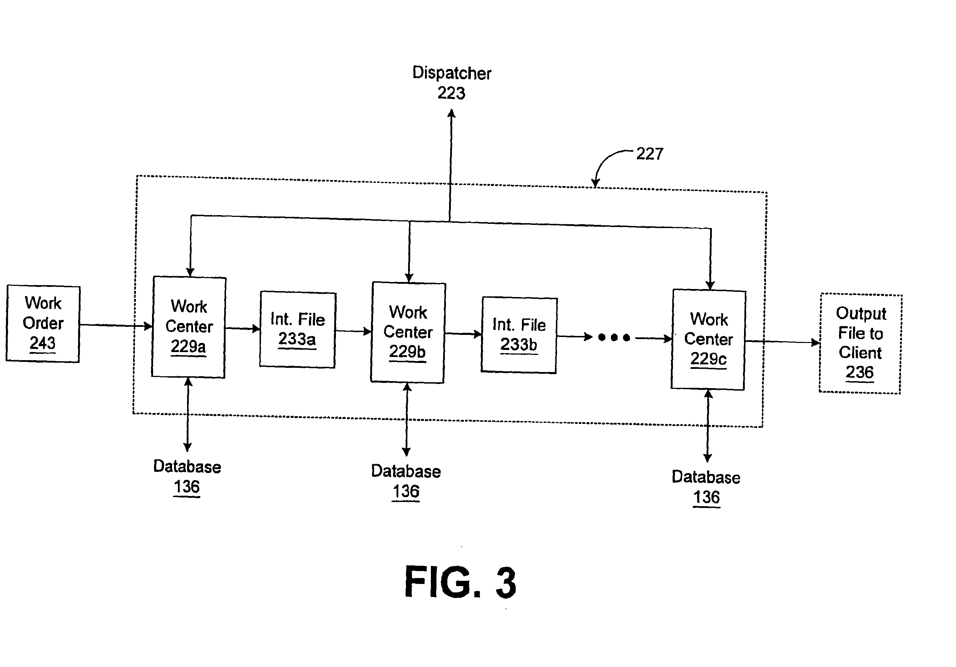

With reference to FIG. 3, shown is the publication assembly logic 227 that includes a functional block diagram of the work centers 229a, b, c... along with the work order 243 and the output file 236 that is supplied to the client 109 (FIG. 1). As depicted in FIG. 3, a work order 243 that has been generated by the dispatcher 223 (FIG. 2) is supplied to the first work center 229a that ultimately generates the intermediate file 233a. The work center 229a receives the content items from the database 136 as identified by the dispatcher 223 as well as any style sheets/templates that are necessary to perform the operations of work center 229a. Work center 229a ultimately generates intermediate file 233a. Work center 229b then operates on the intermediate file 233a to produce intermediate file 233b and so on until a final work center 229c produces the output file 236 as shown. The number of work centers 229 that may be employed in transforming a work order 243 into the output file 236 may vary depending on the particular presentation platform that is employed by the client 109. For example, some presentation platforms may require much more processing than other presentation platforms to transform the work order 243 into the output file 236. Thus, for some presentation platforms, only a single work center 229 need be employed to obtain an output file 236 without intermediate files 233 whereas other presentation platforms may employ multiple work centers 229 with multiple intermediate files 233.

The work centers 229 as shown perform various functions. Some of these functions may be, for example, transforming an extensible markup language (XML) file to another XML file. Other functions may involve extracting metadata from a file, generating a summary of a file, or performing various housekeeping functions such as deleting intermediate files out of memory, *etc.* The work centers 229 may comprise, for example, an extensible stylesheet language (XSL) processor that operates on appropriate stylesheets.

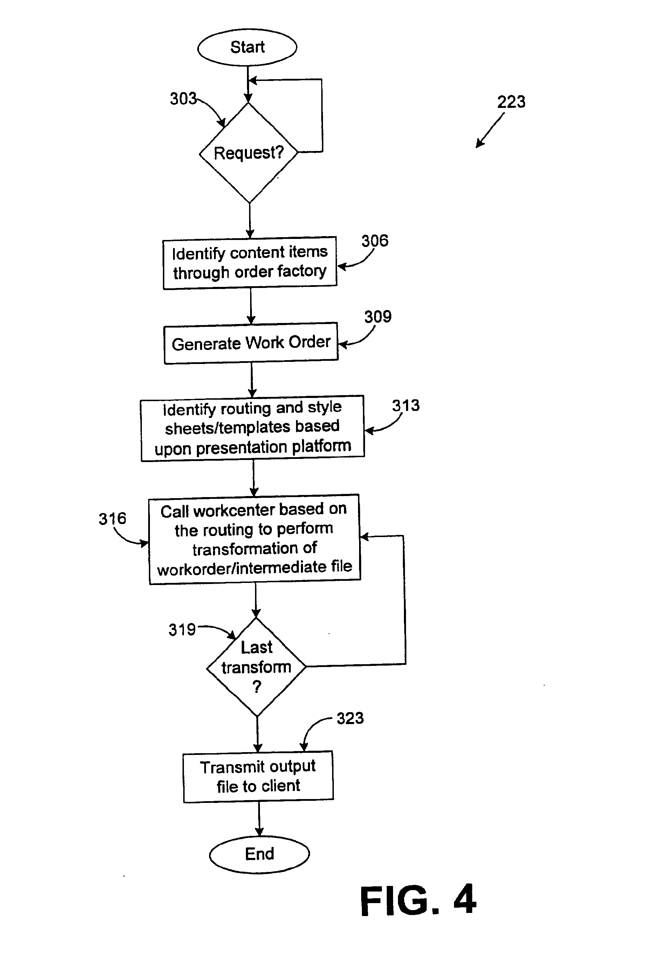

Referring next to FIG. 4, shown is a flow chart of the particular logical functions performed by the dispatcher 223 (FIG. 2). Alternatively, the flow chart of FIG. 4 may represent the method steps taken by the dispatcher 223. Beginning with block 303, the dispatcher 223 waits for a request 203 (FIG. 2) to be received from either the publication server 103 (FIG. 1) pursuant to the server request logic 139, or from the client 109 pursuant to the client request logic 193 (FIG. 1). Assuming that a request 203 has been received, the dispatcher 223 moves on to block 306 in which the content items associated with the particular publication to be generated are identified on the database 136 (FIG. 2) through the order factory 226 (FIG. 2). Thereafter, in block 309 the dispatcher 223 generates the work order 243 (FIG. 3) from the order received from the order factory 226.

Next, in block 313 the dispatcher 223 identifies a routing and any style sheets/templates that are needed to process the work order 243 by the work centers 229 (FIG. 3). Thereafter, the dispatcher 223 moves to block 316 in which an appropriate work center 229 is called to perform a transformation of either the work order 243 or an intermediate file 233 (FIG. 2) as indicated by the routing received from the database 136. In particular, the work order 243/intermediate file 233 may be processed into either another intermediate file 233 or the output file 236. In addition, the operation of the work centers 229 may involve functions other than transforming the work order 243/intermediate file 233 as discussed previously.

Next, in block 319 the dispatcher 223 determines whether the last transformation and/or other operation has been performed by the final work center 229, thereby resulting in the output file 236 (FIG. 2). Such is indicated, for example, by the routing that is associated with the particular presentation platform 213 (FIG. 2). If not, then the dispatcher 223 reverts back to block 316 for further transformations and/or other operations to be performed by additional work centers 229. However if the last transformation and/or other operation is performed in block 319, then the dispatcher 223 moves to block 323 in which the output file 236 (FIG. 2) is transmitted to the client 109 (FIG. 1) accordingly.

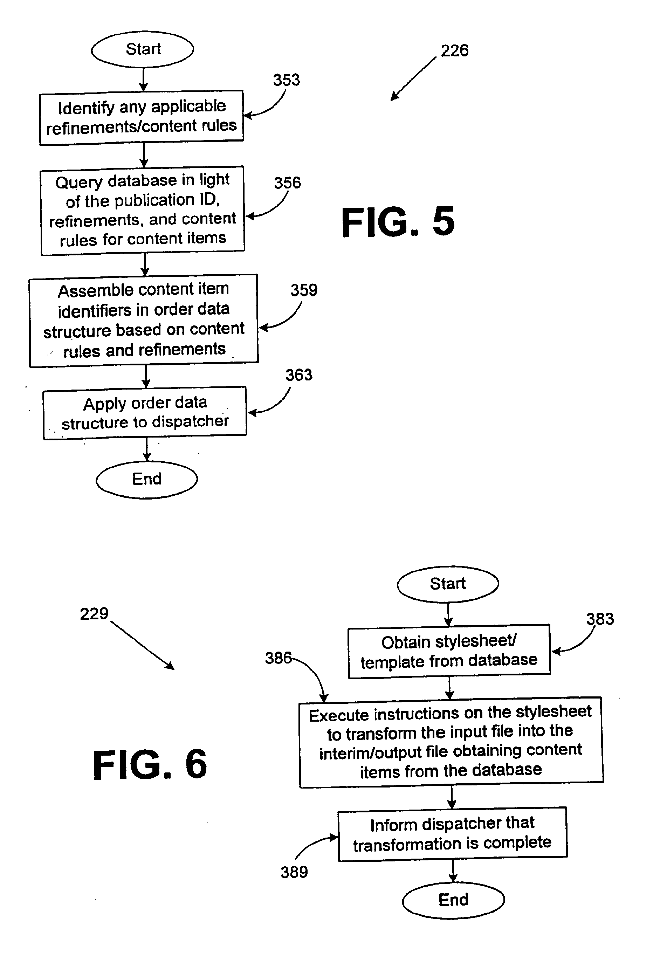

Turning then to FIG. 5, shown is a flow chart of the order factory 226 according to another aspect of the present invention. Alternatively, the flow chart of FIG. 5 may represent the method steps taken by the order factory 226. The functionality performed by the order factory 226 generally obtains the list of the content items to be placed in the publication from the database 136 as discussed previously. Beginning with block 353, the order factory 226 identifies any applicable refinements 216 (FIG. 2) and content rules that apply to the particular publication. The refinements 216 (FIG. 2) are found in the request 203 (FIG. 2) and the content rules may be obtained from the database 136 (FIG. 1). For example, the refinements may include a publication date, a type of content item, or other such identifying information. The content rules may stipulate, for example, that a certain content item is not to be published until after a specific date also know as a "blackout" date, *etc.*

Thereafter, the order factory 226 moves to block 356 in which the database 136 (FIG. 2) is queried in light of the publication identifier 209, the refinements 216, and the content rules that apply to the specific content item. Then, in block 359, the order factory 226 assembles the content item identifiers in an order that is sent back to the dispatcher 223. The order itself may comprise a particular data structure stored in the memory 126 (FIG. 1). Finally, in block 363 the order data structure is applied to the dispatcher 223 for further processing to generate the work order 243 and to be processed by the work centers 229, *etc.* Thereafter, the order factory 226 ends appropriately.

With reference to FIG. 6, shown is a flow chart that provides an example of functionality that is performed by a work center 229 (FIG. 2) in the case that the work center 229 is an XSL processor. Alternatively, the flow chart of FIG. 6 may represent the method steps taken by the work center 226. Beginning with block 383, the work center 229 obtains any necessary style sheet and/or template from the database 136 (FIG. 2). Thereafter, in block 386 the work center 229 executes instructions on the style sheet to transform a prospective work order 243 (FIG. 3)/intermediate file 233 (FIG. 2) into an appropriate interim file 223/output file 236 (FIG. 2). The work center 229 obtains any necessary content items from the database 136 as well. Thereafter, in block 389 the work center 229 informs the dispatcher 223 (FIG. 2) that the transformation is complete so that the next work center 229 may be called or otherwise activated by the dispatcher 223.

Among the advantages provided by the present invention is the fact that the publication distribution logic 133 allows users to request a publication that is delivered to a client 109 in a convenient manner. In addition, the publication is formatted in a digital file (the output file 236) that is recognizable and may be manipulated by one of a number of presentation platforms. Thus, the present invention provides a publication to a user that may include content from many sources in a form convenient to the particular user.

Referring back to FIG. 1, although the logic 133, 136, 139, 163, 193, and 196 of the present invention is embodied in software as discussed above, as an alternative the logic 133, 136, 139, 163, 193, and 196 may also be embodied in hardware or a combination of software and hardware. If embodied in hardware, the logic 133, 136, 139, 163, 193, and 196 can be implemented as a circuit or state machine that employs any one of or a combination of a number of technologies. These technologies may include, but are not limited to, discrete logic circuits having logic gates for implementing various logic functions upon an application of one or more data signals, application specific integrated circuits having appropriate logic gates, programmable gate arrays (PGA), field programmable gate arrays (FPGA), or other components, *etc.* Such technologies are generally well known by those skilled in the art and, consequently, are not described in detail herein.

The block diagrams and/or flow charts of FIGS. 2-6 show the architecture, functionality, and operation of an implementation of the logic 133. If embodied in software, each block may represent a module, segment, or portion of code that comprises one or more executable instructions to implement the specified logical function(s). If embodied in hardware, each block may represent a circuit or a number of interconnected circuits to implement the specified logical function(s). Although the block diagrams and/or flow charts of FIGS. 2-6 show a specific order of execution, it is understood that the order of execution may differ from that which is depicted. For example, the order of execution of two or more blocks may be scrambled relative to the order shown. Also, two or more blocks shown in succession in FIGS. 2-6 may be executed concurrently or with partial concurrence. It is understood that all such variations are within the scope of the present invention.

Also, the logic 133 can be embodied in any computer-readable medium for use by or in connection with an instruction execution system such as a computer/processor based system or other system that can fetch or obtain the logic from the computer-readable medium and execute the instructions contained therein. In the context of this document, a "computer-readable medium" can be any medium that can contain, store, or maintain the logic 133 for use by or in connection with the instruction execution system. The computer readable medium can comprise any one of many physical media such as, for example, electronic, magnetic, optical, electromagnetic, infrared, or semiconductor media. More specific examples of a suitable computer-readable medium would include, but are not limited to, a portable magnetic computer diskette such as floppy diskettes or hard drives, a random access memory (RAM), a read-only memory (ROM), an erasable programmable read-only memory, or a portable compact disc.

Although the invention is shown and described with respect to certain preferred embodiments, it is obvious that equivalents and modifications will occur to others skilled in the art upon the reading and understanding of the specification. The present invention includes all such equivalents and modifications, and is limited only by the scope of the claims.

## Claims

1. A method for formatting a publication, comprising the steps of:
associating a content item with a publication in the server (103);
identifying a presentation platform from a number of potential presentation platforms; and
generating an output file (236) in the server (103) including the content item in a digital format recognizable by the presentation platform.

2. The method of claim 1, wherein the step of identifying a presentation platform from a number of potential presentation platforms further comprises the step of parsing a received publication request (203) to identify the presentation platform contained therein.

3. The method of claim 1, further comprising the step of receiving a publication request (203), wherein the request identifies the publication and the presentation platform.

4. The method of claim 1, wherein the step of associating a content item with a publication in the server (103) further comprises the steps of:
identifying a publication identifier (209) in a received publication request (203); and
searching a content database (136) for the content item based upon the publication identifier (209).

5. The method of claim 1, wherein the step of associating one of a number of presentation platforms with a publication further comprises the step of receiving a publication request (203), the publication request (203) including a presentation platform identifier associated with the presentation platform and a publication identifier (209) associated with the publication.

6. A system for formatting a publication, comprising:
a processor (123) coupled to a local interface (129);
a memory (126) coupled to the local interface (129);
publication distribution logic (133) stored on the memory (126) and executable by the processor (123), the publication distribution logic (133) comprising:
logic to associate a content item with a publication in the server (103);
logic to identify a presentation platform from a number of potential presentation platforms; and
logic to generate an output file (236) in the server (103) including the content item in a digital format recognizable by the presentation platform.

7. The system of claim 6, wherein the logic to identify a presentation platform from a number of potential presentation platforms further comprises logic to parse a received publication request (203) to identify the presentation platform contained therein.

8. The system of claim 6, wherein the publication distribution logic (133) further comprises logic to receive a publication request (203), wherein the request identifies the publication and the presentation platform.

9. The system of claim 6, wherein the logic to associate a content item with a publication in the server (103) further comprises:
logic to identify a publication identifier (209) in a received publication request (203); and
logic to search a content database (136) for the content item based upon the publication identifier (209).

10. The system of claim 6, wherein the logic to associate one of a number of presentation platforms with a publication further comprises logic to receive a publication request (203), the publication request (203) including a presentation platform identifier associated with the presentation platform and a publication identifier (209) associated with the publication.
